# EUROPEAN PATENT APPLICATION

(11) **EP 1 918 082 A2**
(43) Date of publication of application: **07.05.2008**
(21) Application number: 07381063.2
(22) Date of filing: 18.09.2007
(51) Int. Cl.: B28B 11/08

(54) **Machine for precutting ceramic tiles**

(30) Priority: 30.10.2006 ES 200602757
(71) Applicant: Maincer, S.L., 12200 Onda (ES)
(72) Inventor: Vigil Fernandez, Francisco c/o Maincer, S.L., 12200 Onda (Castellon) (ES)
(74) Representative: Esteban Perez-Serrano, Maria Isabel

(57) **Abstract**

The machine is designed to make incisions or pre-cuts in the upper surface of a ceramic tile, in a procedure prior to firing the tile, with the machine being provided with a series of belts (4) which drag the ceramic piece, moving it between lateral and parallel guides (8) with an axis (10) located on the belts (4) provided with discs (9) with which incisions or pre-cuts are made on the tile, with the height of the axis (10) support (11)being adjustable and therefore also that of the discs (9), thus enabling a greater or lesser depth of incision or pre-cut to be made on the ceramic tile.

## Description

### OBJECT OF THE INVENTION

The present invention refers to a machine designed to pre-cut or make incisions in ceramic tiles, making the cuts in two directions perpendicular to each other, in order to determine on the upper surface of tile a square simulating the materialisation of a plurality of small ceramic pieces.

The object of the invention is to provide the market and specifically the tile or ceramic manufacturing sector, with a machine which enables incisions or pre-cuts to be made in tiles, leading to considerable energy savings and which is more convenient than the systems currently used for the same purpose.

Another object of the invention is to save water in the manufacturing process of ceramic tiles as well as simplifying the industrial procedure.

### BACKGROUND TO THE INVENTION

At present, pre-cutting or making incisions in ceramic pieces specifically tiles is carried out subsequent to their firing in a kiln. That is, once the appropriate decoration has been applied, enamelling and firing of the ceramic tile has been carried out an additional operation is required to finish the piece, namely pre-cutting or making incisions in the tile to simulate a plurality of small pieces and thus to achieve the desired finish.

When a ceramic piece is fired, considerable energy is required in the diamond discs in order to make the incisions or pre-cuts and in addition water is needed to cool the diamond discs, as otherwise they would soon burn out.

As a result, the water which is required and applied to the discs becomes sludge as it mixes with the dust from the surface of the cut tile, which then becomes difficult to remove, requiring subsequent waste treatment, final cleaning etc. in addition to the fact that part of the water is absorbed by the ceramic piece, and thus a further drying procedure is required to eliminate the water absorbed, with concomitant use of electrical energy and gas.

In addition, due to the ceramic industry production process, the fired pieces come packed in boxes and these need to be unpacked, the tiles cut and incisions made following cleaning, as mentioned, and then they are repacked once more.

Another factor to bear in mind is that in current systems, as a consequence of the considerable force which needs to be applied in the pre-cutting or incision making process, due to the extreme hardness of the tile following its firing, complex anchoring mechanisms are required to hold the pieces while they are pre-cut.

### DESCRIPTION OF THE INVENTION

The proposed machine has been designed to resolve the aforesaid difficulty so that having been designed, as mentioned, to make pre-cuts or incisions in the tiles or ceramic pieces for the purpose of simulating various smaller parts when laying, the cuts in which are made superficially in order to create grooves which are not enamelled and when laid will be filled with grouting for joints giving the visual impression of smaller pieces, it may be said that the machine for making these incisions or grooves is characterised in that it is sited between the enamelling and decoration stage and the firing stage of the ceramic pieces within the industrial manufacturing procedure for tiles.

In this way the machine acts on the ceramic piece or tile, making incisions or pre-cuts before firing, and thus it will not acquire the hardness characteristics conferred by the firing stage, and therefore much less power will be required by the machine, approximately 80% less than in the case of traditional machines with the concomitant savings in energy.

Furthermore, as the machine will work on a shaped but not fired tile, high temperatures are not reached in the pre-cutting stage and therefore no water cooling system is needed, thus avoiding the mechanisms required for water supply and making considerable savings in use of this commodity, as well as savings on drying and cleaning processes since the residue obtained is merely dust which is suctioned up in a simple manner.

In addition, the machine which is the object of this invention does not require the complex and robust mechanisms needed to hold the ceramic pieces, as traditionally required, as the machine is designed to work on less hard ceramic pieces and therefore they do not need to be held as firmly as in the case of conventional machines.

Specifically, the machine which is the object of this invention is based on a general structure or frame in which a bracket or corbel is established, comprising transport belts for the tiles or ceramic pieces which run horizontally between corresponding pairs of pulleys arranged between an attachment device for the ceramic pieces and an outlet where there a suction device to take up the dust generated in the pre-cutting or incision making process, carrying out this operation using a series of discs mounted on an axis situated on top of the bracket, and mounted between a height adjustable support which can raise or lower the discs and thus make pre-cuts or incisions of varying depth in accordance with requirements, or as appropriate to each case.

The machine is also complemented with a control panel or device for controlling the movements and safety of the machine as well as being provided with a sensor which detects the measurements of the ceramic pieces which are placed on the brackets and specifically on parallel guides between which the transport belts are situated, with these guides being adjustable according to the tile measurement which, as mentioned, is detected by a sensor.

In addition to advantages mentioned, the machine has a simple structure which operates in a reliable manner and efficiently carries out its function.

### DESCRIPTION OF THE DRAWINGS

In order to complete this description and to enable a greater understanding of the characteristics of the invention, in accordance with a practical preferred embodiment thereof, a set of drawings are attached which form an integral part of this description and which are illustrative but not restrictive of the invention, And which represent as follows:
Figure 1.- shows a general perspective of the machine in accordance with the object of the invention.
Figure 2.- also shows a perspective view of what is considered to be the bracket of the machine showing the location guides for the ceramic tiles, the system for holding the tiles and the transport belts and also the axis with the pre-cutting discs.
Figure 3.- Shows a plan view of a ceramic piece or tile with the incisions or pre-cuts made with the machine represented in the previous figures showing how the square establishing those incisions or pre-cuts simulates the formation of a number of small-sized tiles.

### PREFERRED EMBODIMENT OF THE INVENTION

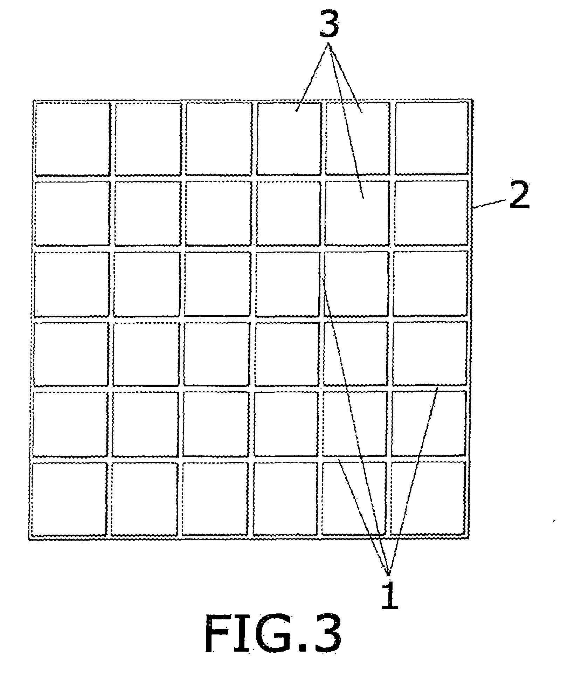

As may be seen in the aforementioned figures, the machine which is the object of this invention is designed to make incisions or pre-cuts (1) on the upper surface of the ceramic tile or piece (2) as represented in figure 3, in order to simulate a plurality of small ceramic pieces which, however, comprise one same piece or tile (2) all of which in such a way that the grooves or incisions created (1) and which have not been enamelled shall be filled following laying with a grouting material giving the visual impression of smaller pieces as mentioned, each of which will correspond to the zones or squares (3) determined by the incisions or pre-cuts (1) made on the tile or ceramic piece (2).

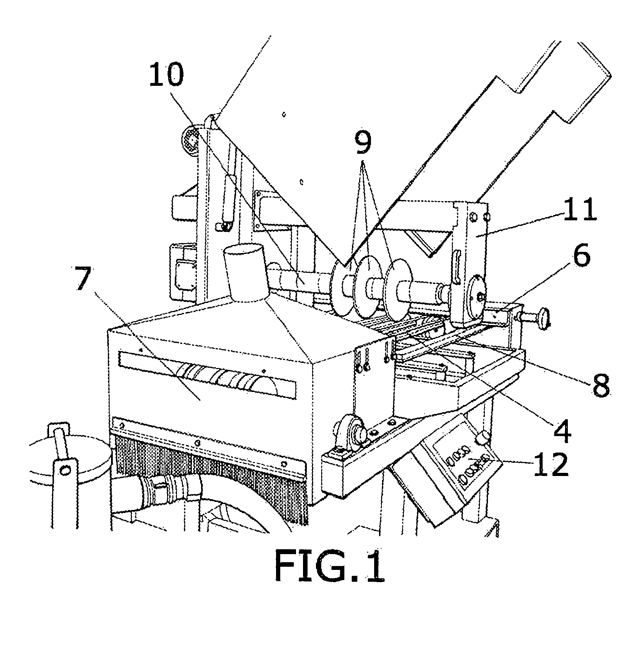

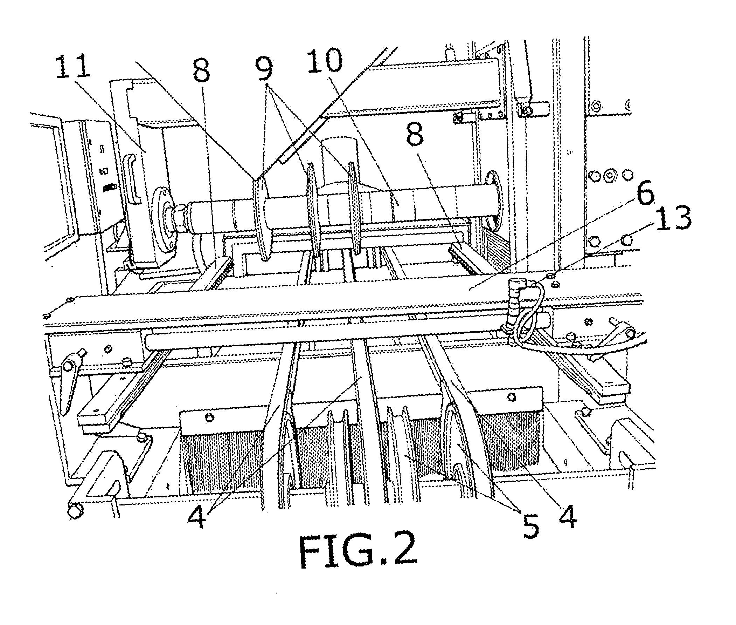

Therefore, the machine for making these incisions or pre-cuts (1) as represented in figures 1 and 2, comprises a frame or general body incorporating a bracket which includes a series of belts (4) mounted between pairs of pulleys (5) for transporting the ceramic tiles or pieces (2) from the entry zone, where a holding element (6) is situated, to the outlet zone where there is a suction device (7).

Collateral to the belts (4) two lateral and parallel guides (8) are situated which, in combination with a sensor (13), permit the tiles to be correctly placed and adjusted for transport and to make accurate incisions and pre-cuts (1) in an operation which is carried out by means of the corresponding discs (9) arranged in an axis (10), mounted between vertical supports (11) which is height adjustable, for the purpose of situating said discs (9) at a varying heights in order to achieve a greater or lesser depth of cut or incision (1) on the ceramic tiles or pieces (2).

The machine described in the industrial manufacturing process of ceramic pieces, is placed between the enamelling and decoration stage and that of firing, therefore making the incisions or pre-cuts (1) on the ceramic parts (2) prior to firing, and thus the pieces do not acquire the hardness conferred by the firing stage.

Based on this fact, the discs (9) require much less power than in the conventional system, as the motors of the machine used in this invention are approximately 80% less powerful than normal, with concomitant energy saving this entails.

Furthermore, due to the fact that work is carried out on the shaped but as yet unfired ceramic piece or tile (2) the procedure does not involve high temperatures in the pre-cutting procedure so that there is no need for a water cooling system to prevent heating and breakage of the discs (9) and also obviating the need for water supply mechanisms and the need to waste any water, as well as any subsequent drying and cleaning processes.

As already mentioned, the mechanism for holding the tiles is based on two parallel guides (8) and the initial profile and stop (6) in combination with a sensor which detects the measurement so that the guides (8) adjust to the dimensions of the pieces or tiles in which the incisions or pre-cuts (1) are to be made as previously mentioned.

The movement and displacement of the ceramic piece or tile on the guides (8) on entering into contact with the cutting discs (9) is controlled by a market speed adjuster, which permits adjustment of the disc speed (9), and also their position at a greater or lesser height, as mentioned, based on the fact that the mounting axis (10) may be adjusted in height in respect of the support (11) on which it is mounted, thus adjusting the pre-cutting measurements or depth of the desired incisions (1).

Having made the pre-cuts or incisions with the machine described, the ceramic pieces are placed in the final suction device (7) in order to remove any residual dust caused by the pre-cutting process, and the clean pieces are subsequently placed in the appropriate kiln which in this process creates an improved piece as the edges of the cuts are softened in the firing and are not as sharp as in current procedures.

Finally, it should be mentioned that the machine is completed with a control panel (12) with the appropriate buttons and switches for controlling the actions and the safety of the machine.

## Claims

1. Machine for making pre-cuts in ceramic tiles, having the means for making incisions or pre-cuts (1) in ceramic pieces or tiles (2), in order to determine small areas (3) which simulate a plurality of ceramic pieces when laying the tile (2) which is **characterised in that** it comprises a frame or general body which, in the manufacturing stage of the tile between the enamelling and decoration process and the firing of the tile, is provided with a bracket on which a series of belts (4) are arranged which pass between pairs of pulleys (5) for dragging and moving the tiles (2) on which the incisions or pre-cuts (1) are to be made, and having a pair of lateral guides (8) and a back profile (6) for the correct positioning of the tiles, in combination with a sensor (13) which detects the measurement established for the tiles for the purpose of appropriately situating the guides (8) between which the ceramic piece or tile (2) passes; with the particularity that on the belts (4) which transport the tiles, a series of discs (9) have been placed, which make the pre-cuts or incisions (1) mounted on an axis (10) situated on a support (11) which can be adjusted to enable the discs (9) to be positioned at varying heights, and to achieve a greater or lesser depth of incisions or pre-cuts (1) made on the upper surface of the ceramic piece or tile (2).

2. Machine for pre-cutting ceramic tiles according to claim 1, **characterised in that** the end and back part of the general frame or body of the machine have been provided with a suction device (7) for removing dust created by the pre-cutting or incision making (1) process on the ceramic tile or piece (2).

3. Machine for pre-cutting ceramic tiles according to claim 1, **characterised in that** it includes a control panel (12) with the appropriate buttons and switches for control operations and safety of the machine.
